(19) **Europäisches Patentamt**
**European Patent Office**
**Office européen des brevets**

(11) **EP 2 252 872 B1**

(12) **EUROPEAN PATENT SPECIFICATION**

(45) Date of publication and mention
of the grant of the patent:
**20.09.2017 Bulletin 2017/38**

(51) Int Cl.:
***G01N 15/12*** *(2006.01)*

(21) Application number: **09716346.3**

(86) International application number:
**PCT/DK2009/000057**

(22) Date of filing: **02.03.2009**

(87) International publication number:
**WO 2009/109190 (11.09.2009 Gazette 2009/37)**

(54) **HIGH RESOLUTION CLASSIFICATION**

HOCHAUFLÖSENDE KLASSIFIKATION

ÉLÉMENT DE CONSTRUCTION AUTOSUPPORTÉ PRÉFABRIQUÉ

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **03.03.2008 DK 200800315**

(43) Date of publication of application:
**24.11.2010 Bulletin 2010/47**

(73) Proprietor: **Koninklijke Philips N.V.**
**5656 AE Eindhoven (NL)**

(72) Inventor: **LARSEN, Ulrik Darling**
**DK-2840 Kgs. Lyngby (DK)**

(74) Representative: **Damen, Daniel Martijn et al**
**Philips Intellectual Property & Standards**
**High Tech Campus 5**
**5656 AE Eindhoven (NL)**

(56) References cited:
**EP-A1- 1 664 737      GB-A- 1 371 432**
**GB-A- 1 469 306      US-A- 3 530 381**
**US-A- 3 733 547      US-A- 3 757 213**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method for determining size distribution of cells in a sample. The sample preferably comprises a mixture of liquid and cells. The sample may be a blood sample.

When examining a sample, e.g. a blood sample, there is a need for a high resolution method of counting and size determining cells in such samples.

One way of counting or characterizing cells is by using a particle characterisation apparatus in which particles suspended in a liquid are passed through an orifice, in principle one by one, to enable the characterisation of the particles, for instance by Coulter counting.

BACKGROUND OF THE INVENTION

It is well-known that particles travelling through a small orifice can be characterised with respect to size, concentration and conductivity by the use of an electrical impedance technique, widely known as the Coulter sizing (see V. Kachel, "Electrical Resistance Pulse Sizing: Coulter Sizing", Flow Cytometry and Sorting, Second Edition, pp. 45-80, 1990 Wiley-Liss).

Counting and sizing of particles by the Coulter principle is an internationally respected method that is being used in most haematology-analysers and particle counting equipment. The method is based on measurable changes in the electrical impedance produced by non-conductive particles in an electrolyte. A small opening, called the "aperture" or "orifice", connects two electrically isolated chambers, where electrodes have been provided to contact the electrolyte. The orifice applies a restriction to the electrical path, whereby a sensing zone is established through which the particles are aspirated. In the sensing zone each particle will give rise to a displacement of the surrounding electrolyte, thus blocking part of the current-path and giving rise to a voltage pulse. By this method several thousand particles per second can be characterised with high precision.

US1371432 discloses a Coulter counter wherein a number of particles are counted. The device is provided to increase the accuracy of the count by allowing a better distinguishment of pulses in a pulse train representative of particles arriving at the sensing zone with a short time interval between passing particles. A maximum threshold level and a minimum threshold level are used in order to count only cells having maximum amplitude between the particular maximum and minimum threshold values. It is also well-known that the peak amplitude of the voltage pulses generated by the particles are closely correlated to the size of the particles, and therefore it is desirable to be able to determine the peak amplitude of voltage pulses in a simple and reliable way and at a low cost.

However, if a high resolution is desired, the traditional way of achieving a higher resolution is to implement hardware with more channels for measuring and categorising pulses, resulting in an increase in hardware cost and complexity. A new method for determining pulse height distribution lowering the cost and providing more simple hardware is required.

The present invention relates to a method of determining the size distribution of cells in a sample by using an apparatus comprising: an analogue to digital pulse height categorisation unit comparing the pulse to analogue threshold voltages and counting each event within each pulse height category using a micro controller, the method comprising the steps of:

> i) selecting a first set of threshold voltages,
>
> ii) performing a first measurement using the first set of threshold voltages,
>
> iii) selecting a new set of threshold voltages different from the first set of threshold voltages,
>
> iv) performing a new measurement using the new set of threshold voltages,
>
> v) determining cell size distribution based on the first measurement and the new measurement.

The selected threshold voltages are applied to the analogue to digital pulses height categorisation unit before performing a measurement. The threshold voltages may also be threshold currents or simply threshold values.

Surprisingly is has been found that performing methods for counting cells in accordance with the method defined above using different or shifted or moved threshold voltages yield a greatly improved precision.

The first set of threshold voltages may be chosen from a look-up table, be entered by a user, calculated or determined on the basis of a known particle size distribution, determined using other means or any combination of the above.

The result of a measurement may be recorded in a memory unit in or electrically connected to the apparatus used for performing the method according to the present invention. The memory unit may be of a temporary sort, such as a buffer or the like.

Also, the recorded data from the measurement may be stored in or transferred to other data storage devices, such as hard drives, optical drives etc.

A new set of threshold voltages are chosen for step iii. The new set of threshold voltages includes at least one new threshold voltage, i.e. the at least one new threshold voltage is different from any of the threshold voltages from the first set. The new measurement may be performed in substantially the same way as the first measurement.

The determination of the cell size distribution is based on the first measurement and the new measurement. The determination may for instance be performed using a back-substitution which is preferably a numerical procedure performed on the set of measurements, in the above case two measurements, but generally the back-substitution may be performed on the entire set of measurements. Generally speaking the determination may be a reverse calculation performed by means of an adapted algorithm reconstructing the original cell distribution on the basis of the set of measurements.

The apparatus mentioned above may have components for obtaining the pulse heights implemented using an integrated circuit, a field programmable gate array or an application specific integrated circuit, or a combination thereof. As an example the pulse height determination unit may comprise a first plurality of comparators with a common input for analogue to digital conversion of the electronic pulses, a first plurality of latches wherein the inputs of the latches are connected to the outputs of respective comparators for recording passage of the corresponding threshold voltages by the rising edge of a pulse, a priority encoder connected to the latch outputs for determination of a pulse height category consisting of pulses with a pulse height within a pulse height interval defined by respective threshold voltages, and a micro controller that is adapted to count the number of pulses within each pulse height category.

It is an advantage of the present invention that the threshold voltages may be individually adjusted as desired. For example, it is not required that the threshold voltages are equidistant. If the possible size distribution of the particles is known, it is possible to select a number of threshold voltages that are adjusted for optimum determination or detection of the actual size distribution of the particles. For example, in analysis of whole blood, it is desirable to count the number of three types of blood cells erythrocytes, leukocytes and thrombocytes. Their size, expressed as equivalent diameter or volume, ranges from app. 1.2 $\mu$m or 1 fl (1 fl = 10-15 l) for the smallest thrombocytes to app. 9 $\mu$m or 400 fl for the largest leukocytes.

Information on the content of leukocytes, their subpopulations and thrombocytes is an important tool for the physician in order to diagnose different diseases and monitor treatment. Furthermore, the concentration of haemoglobin, directly related to the number of erythrocytes, in the blood sample is also of great importance.

Thus, the number of erythrocytes, leukocytes and thrombocytes may be counted utilising the pulse height analyser as described above with threshold voltages that are selected and adjusted in accordance with the known sizes of the erythrocytes, leukocytes and thrombocytes, e.g. by positioning threshold voltages in between corresponding mean values of the individual particle size distributions.

The first set of threshold voltages may define a first threshold voltage span and the new threshold voltages may define a new threshold voltage span. The first threshold voltage span and the new threshold voltage span may overlap or alternatively the first threshold voltage span and the new threshold voltage span do not overlap or further alternatively the first threshold voltage span and the new threshold voltage span have one common point. The first threshold voltage span and the new threshold voltage span may further have more than one common point. The span is preferably defined by the highest threshold voltage and the lowest threshold voltage in a given set.

The back-substitution mentioned above may be chosen dependent on the interrelation of the threshold voltages of the individual sets of threshold voltages.

The number of threshold voltages in a threshold voltage set may depend on the number of elements in the first plurality mentioned above. The number of threshold values may be 2 to 20, such as 5 to 15, such as 8 to 12, such as 2 to 5, such as 5 to 8, such as 8 to 10, such as 10 to 12, such as 12 to 15, such as 15 to 18, such as 18 to 20, such as 8. The actual number of threshold values may depend on the apparatus used for performing the method according to the present invention. It is an advantage of the present invention that the method may be implemented as a software program executed on either existing hardware or in the alternative on especially developed hardware.

It is an advantage of the present invention that the steps iii) and iv) may further be performed 1 to 20 times such as 5 to 15 times such as 8 to 12 times such as 2 to 5 times such as 5 to 8 times such as 8 to 10 times such as 10 to 12 times such as 12 to 15 times such as 15 to 18 times such as 18 to 20 times such as 10 times. The number of times that the measurements are repeated may depend on desired accuracy and/or amount of test fluid. As the test fluid is to be passed through an orifice there may be a limited amount of fluid available, alternatively the fluid may be re-circulated. It may be further advantageous that the fluid comprises a substantially homogenous distribution of particles, i.e. blood cells or the like.

In particular embodiments of the present invention the new set of threshold voltages in each repetition may be different from any previously chosen set of threshold voltages. A set of threshold voltages may considered different from any other set when at least one threshold voltage is different from any other previous threshold voltage in the set of threshold voltages. Alternatively all threshold voltages of each set may be different from any other threshold voltages of any other set of threshold voltages, i.e. the same threshold voltage is not reused in any set of a given set of measurements.

It is particularly advantageous that a new set of threshold voltages may be calculated using the equation:

$$T_{i,j+1} = \alpha_{i,j+1} T_{i,j} + \beta_{i,j+1}$$

where:

each set of threshold voltages include N number of threshold voltages,

Ti is the i'th threshold value, i = 0 to N-1

j is the j'th threshold voltage set, j = 1 to the number of repetitions of steps iii) and iv).

In some embodiments of the present invention the equation may be modified to:

$$T_{i,j+1} = \alpha_{i,j+1} T_{x,j} + \beta_{i,j+1}$$

Where $T_{x,j}$ are the threshold voltages of the x'th set. In some embodiments the threshold values may be calculated based on the first set of threshold voltages, i.e. x=1 in the above equation. In other embodiments the threshold values may be calculated on the previous set of threshold values.

The threshold values may be pre-calculated using any of the above equations and subsequently stored in a look-up table, in a database or any other suitable storage. Alternatively a set of threshold voltages may be calculated during or shortly prior to each repetition of the measurement steps above, i.e. calculated on-the-fly or during the measurement. Further alternatively the threshold voltages may be inputted by a user and stored for use when performing the measurements.

Depending on the distribution of the actual sizes of the cells to be counted, the first threshold values may be equidistantly distributed or the first threshold values may be distributed at non-equidistant distances. The subsequent threshold values do not need to have the same characteristics as the first threshold values. As an example the equation above may result in a series of threshold voltages where a first set of threshold values are equidistantly distributed, whereas the second set, calculated on the basis of the first set, is not equidistantly distributed.

The following sets of threshold values, as stated above, may be calculated using any of the above mentioned equations. In the equations the $\alpha$'s may have any positive real value or be zero, and the $\beta$'s may have any real value, i.e. negative, positive or zero. In an embodiment where all $\alpha$ values are 1 or 0, the value $\beta$ will cause the span of the threshold values to be shifted either up of down depending on the sign of $\beta$.

In most embodiments the first set of threshold voltages start at some distance from zero, as the size of the particles to be characterised influence the voltages created, and these voltages are usually different from zero.

As mentioned above the method according to the present invention may be implemented as a software program, and the present invention thus further relate to an apparatus comprising a computer software implementation of the method according to the present invention. Also the present invention relates to a data-carrying medium comprising a computer software implementation of the method according to the present invention. The data carrying medium may be a hard drive, a flash drive, an optical storage disk, such as a compact disk (a CD) or a digital versatile disk (a DVD) or any other suitable data carrying medium.

BRIEF DESCRIPTION OF THE DRAWINGS

In the following the invention will be further described and illustrated with reference to the accompanying drawings in which:

Fig. 1 is a schematic illustration of a result of a first measurement on two cell populations,

Fig. 2 is a schematic illustration of a result of a second measurement on the two cell populations of Fig. 1,

Fig. 3 is a schematic illustration of a result of a first measurement performed using the method according to the present invention, and

Fig. 4 is a schematic illustration of a result of a second measurement performed using the method according to the present invention,

Fig. 5 is a schematic illustration of a result of a measurement performed using a known method on a second cell population,

Fig. 6 is a schematic illustration of a result of a measurement performed using the method according to the present invention on a second cell population, the method utilizing non-equidistant threshold values,

Fig. 7 is a schematic illustration of a calculated back-substitution of the measurement in Fig. 6,

Figs. 8-10 are schematic illustrations of one way of implementing a measurement using a single threshold,

Figs. 11-13 are schematic illustrations of one way of implementing a measurement using eight threshold values, and

Figs. 14-17 are schematic illustrations of one way of implementing a measurement using non-equidistant threshold values.

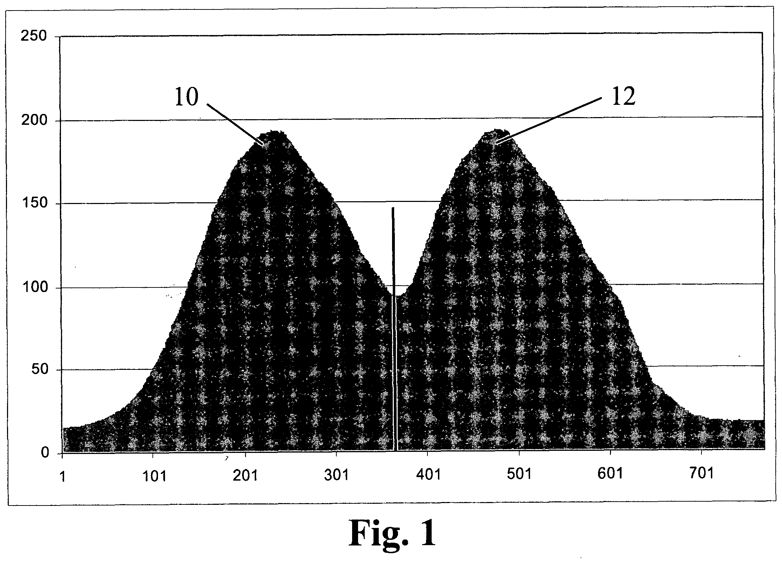

Fig. 1 is a schematic illustration representing measurement results performed using a know method of counting cells. A mixture of two overlapping cell populations was used.

For the measurement a very high resolution was applied. The test equipment featured 800 discrete channels. The known method of counting cell populations is a high cost method requiring complicated hardware and software.

The x-axis in Fig. 1 represents the channel number. The y-axis in Fig. 1 represents counts in a given channel.

The two cell populations under investigation in Fig. 1 included two different sized cells, which is evident from the two peaks 10, 12. It is relative easy to determine the spilt between the two cell populations.

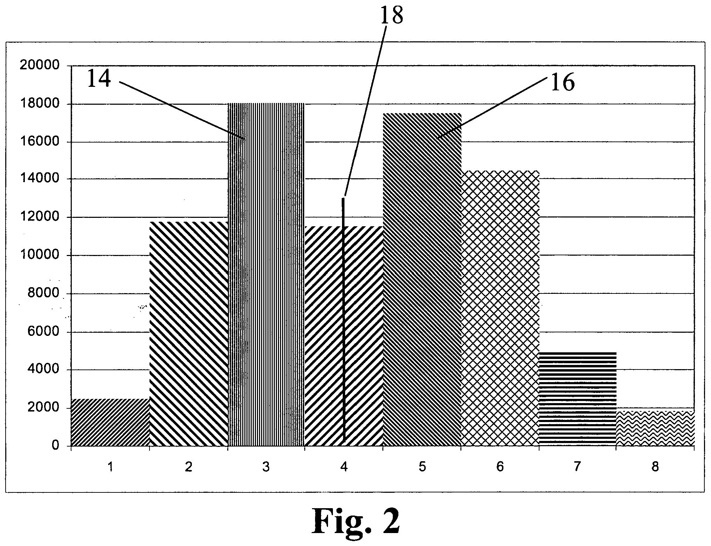

Fig. 2 is a schematic representation of a second measurement of the same cell population as investigated in Fig. 1. Here a lower resolution is used, 8 channels. The lower number of channels reduces hardware complexity and cost, but at the expense of resolution. Two peaks 14, 16 are still visible, but not to the same extend as in Fig. 1.

Due to the lower resolution it is difficult to determine the exact split, at 18, between the two populations.

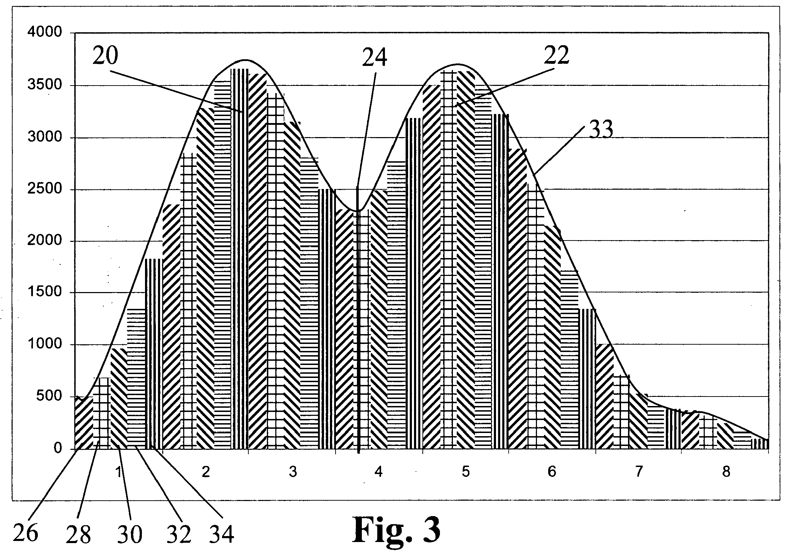

Fig. 3 is a schematic representation of a measurement of the same cell population as above. This measurement is performed using the method according to the present invention.

A system having 8 channels, as was also the case with the measurement in Fig. 2, is used.

The system or apparatus comprises 8 comparators with a common input for analogue to digital conversion of electronic pulses, 8 latches wherein the inputs of the latches are connected to the outputs of respective comparators for recording passage of the corresponding threshold voltages or values by the rising edge of a pulse, a priority encoder connected to the latch outputs for determination of a pulse height category consisting of pulses with a pulse height within a pulse height interval defined by respective threshold voltages, and a micro controller that is adapted to count the number of pulses within each pulse height category.

The x-axis of the chart in Fig. 3 represents the 8 channels. The y-axis of the chart in Fig. 3 represents the counts in the respective channels.

The method is performed by first selecting a first set of threshold voltages followed by performing a first measurement using the first set of threshold voltages. Then selecting a new set of threshold voltages different from the first set of threshold voltages, and performing a new measurement using the new set of threshold voltages.

The measurement is repeated 5 times, illustrated by the 5 bars 26, 28, 30, 32 and 34. In each repetition of the measurement the threshold voltages are moved or shifted according to the general equation:

$$T_{i,j+1} = \alpha_{i,j+1} T_{i,j} + \beta_{i,j+1}$$

where each set of threshold voltages include N number of threshold voltages, Ti is the i'th threshold value, i = 0 to N-1, j is the j'th threshold voltage set, j = 1 to the number of repetitions. In the example in Fig. 3 N = 5 and all $\alpha$ = 1.

Each slot of the x-axis represents a channel. Each channel comprises bars comparative to the number of repetitions of the measurement, here 5 repetitions are performed. In this example the threshold values are shifted or moved an equidistant distance.

Repeating the measurement with different threshold values, calculated using the equation above, gives a surprisingly significantly improved result compared to the method described in relation to Fig. 2.

The method according to the present invention is relatively easy to scale depending on the desired resolution. When using the known method, as described in relation to Figs. 1 and 2, an up-scaling of the resolution requires additional or adapted hardware, resulting in increased cost and complexity of the hardware.

Comparing the result in Fig. 3 to the result of Fig. 2, determination of split between cell populations in the result in Fig. 3 is improved. The split is illustrated by the line 24 between the two peaks 20 and 22.

A curve 33 illustrates the particle size distribution calculated on the basis of the result illustrated by the bars in Fig. 3.

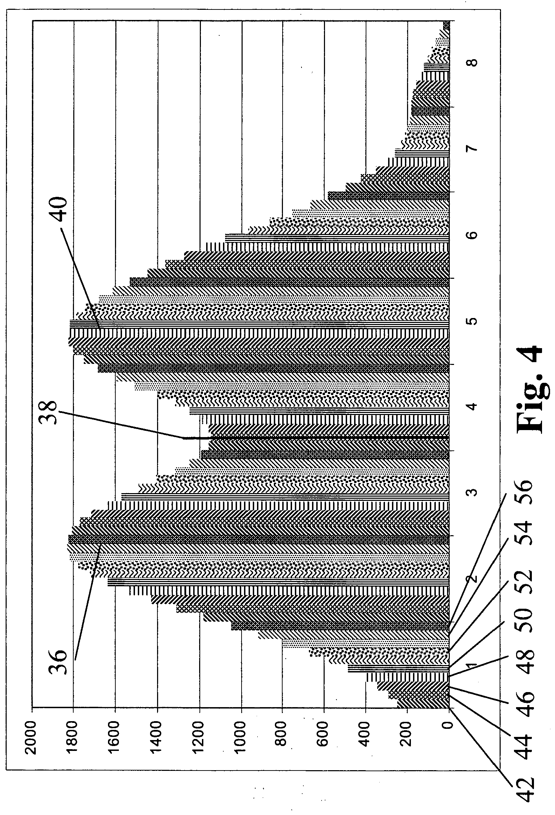

Fig. 4 schematically illustrates a chart where the method according to the present invention has been used to perform eight measurements with corresponding eight shifts in threshold values. Each shift is represented by a bar 42, 44, 46, 48, 50, 52, 54 and 56. Each of the eight channels comprises 8 bars. Comparing the bar chart in Fig. 4 to the bar chart of Fig. 3, the chart in Fig. 4 provides a more detailed view of the population giving a still improved basis for determining split between cell types. Also the determination of the number of cells in each category represented by the channels is improved, i.e. it is possible to determine or estimate how many cells are in a given size category by inspecting the bar chart.

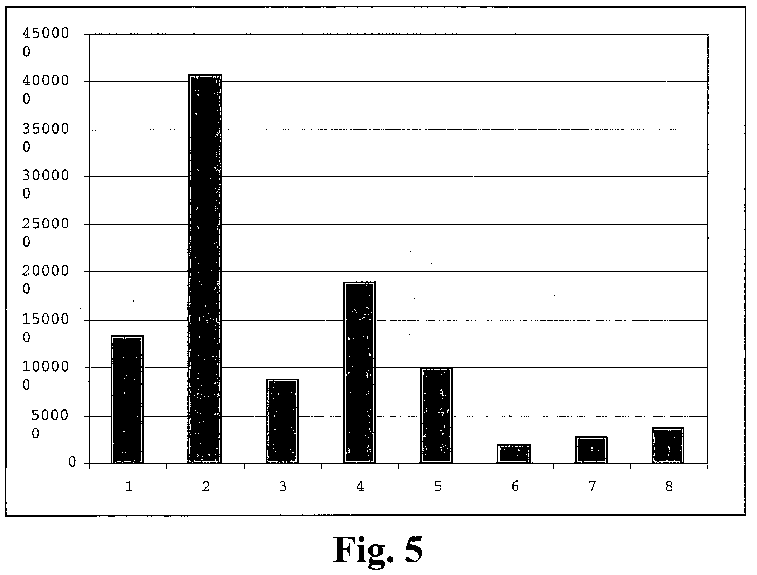

Fig. 5 is a schematic bar chart of a measurement performed using a device having eight channels. The measurement was performed one time. The measurement included non-equidistant threshold intervals and/or values. A precise size distribution of the cells in the population is not clearly evident from this result.

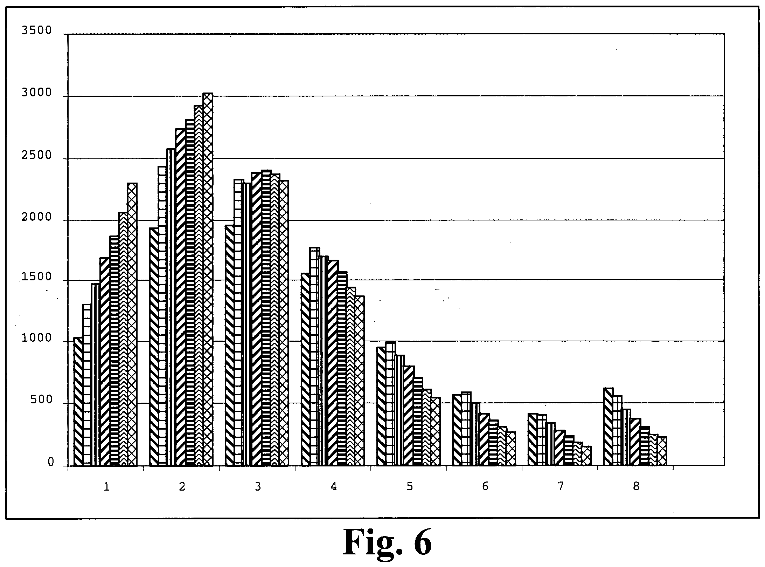

Fig. 6 is a schematic bar char illustrating a measurement on the same cell population as used for the measurement in Fig. 5. Due to the non-equidistant distribution of the threshold intervals the movement or shift of the threshold values case the intervals of the different repetitions to overlap. This overlap may also be seen in the result. In the slot on the x-axis corresponding to the first channel the 7 bars have an increasing height. In the adjacent slot, corresponding to the second channel, the first bar is lower than the last bar in slot 1, and the second to last bar as well. This is due to the overlap of the threshold intervals. Comparing to the bar chart of e.g. Fig. 3, the bars in Fig. 3 nicely defines a curve representing the size distribution.

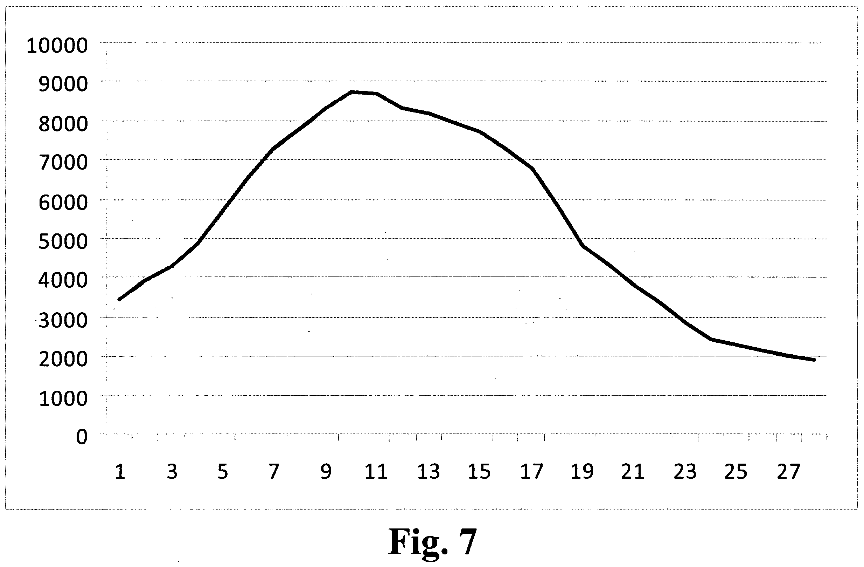

Before the bar chart of Fig. 6 more precisely illustrate the size distribution some data processing is required. Using an appropriate back-substitution routine on the obtained result, the curve illustrated in Fig. 7 is obtained.

In all examples given in Figs. 1-7, the x-axis denotes channel number, and each channel relate to a size interval. The size interval is given by the hardware implementation.

As described above in stead of using more fixed thresholds for the size classification, the adjustment of the current or voltage thresholds may be used for stepping the thresholds during the testing or measuring e.g. with a fixed time sequence. The change in each box will reflect the resolution of a size classification with a resolution matching the step. It is thus the size of the step that determines the resolution.

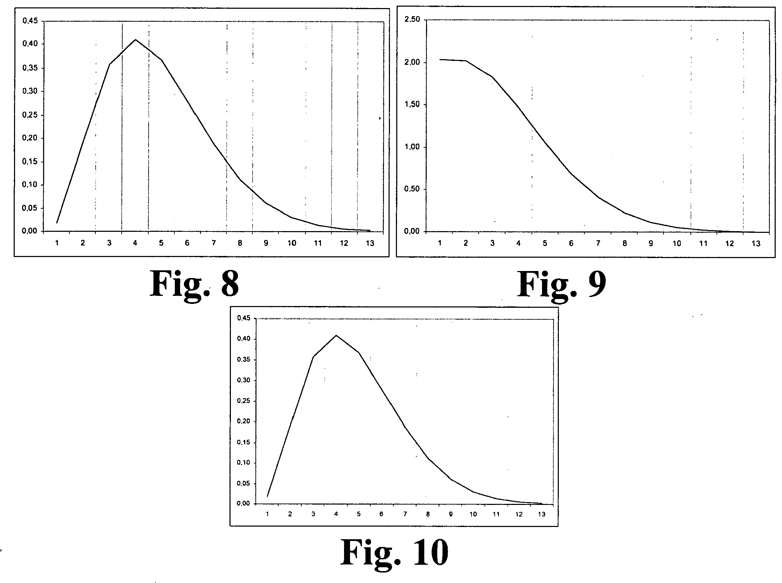

One simple example is the case where there is only one classification defined by a single threshold. With a given constant and limited distribution of pulses heights, such as illustrated by Fig. 8, the threshold may be swept over the entire distribution in N steps, with a fixed time between each step of t seconds. The count, $C(i)$ of each step is stored and shown in Fig. 9. The distribution of the pulse heights can now be found as an N-class resolution by calculating class content, $P(i)$, as:

$$P(i) = C(i)-C(i+1), \ i = 1 \text{ to } N-1$$

The result is shown in Fig. 10.

In an embodiment where 8 classes are used to categorize the pulse heights, it may be advantageous to use equidistant thresholds. In this way the steps may be chosen to match the width of the classifications divided by the number of steps used.

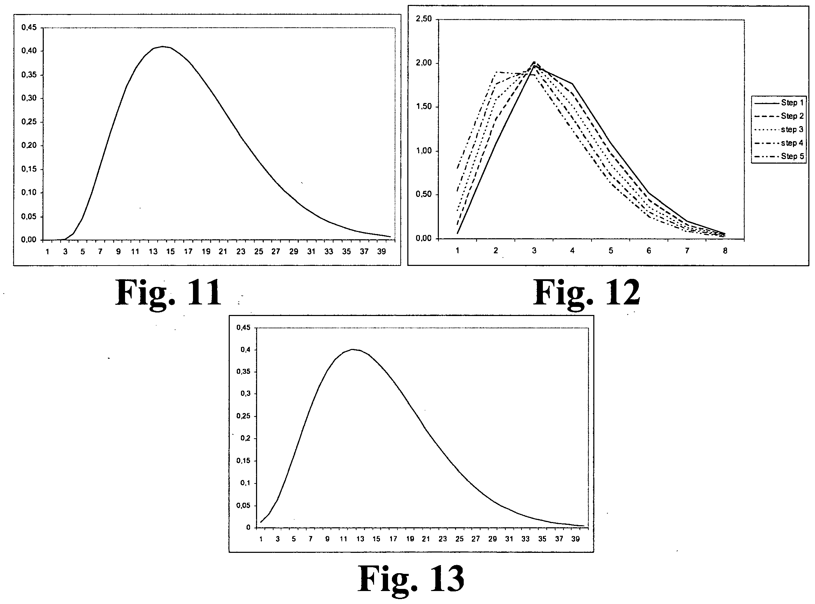

Furthermore, it may be advantageous to match the thresholds such that the full pulse height distribution is always included. This way the total count of the pulses in each time frame should remain the same, which is easily verified. Given a pulse height distribution as illustrated in Fig. 11 the 8-class resolution counting with 5 steps, see Fig. 12, could be noted as $C(j:i)$ where j denotes the j-th class and i denotes the i-th step. The 40-class distribution can be found by calculating class content, $P(i)$ as:

$$P(i+5*(j-1)) = C(j:i)/5, \ j = 1 \text{ to } 8, i = 1 \text{ to } 5$$

The result of the calculation on the basis of the measurement is shown in Fig. 13.

In some embodiments non-equidistant thresholds may be used. The back substitution may be more complicated and depends on the variation of the distances. The easiest way to overcome this problem is to resolve each size classification into classifications of the same threshold distance as the shortest distance, this should preferably be an integer number. The summed content of the partitioned classifications are equal to the content of the original size classification but may be distributed unequally by interpolation with the neighbour size classifications.

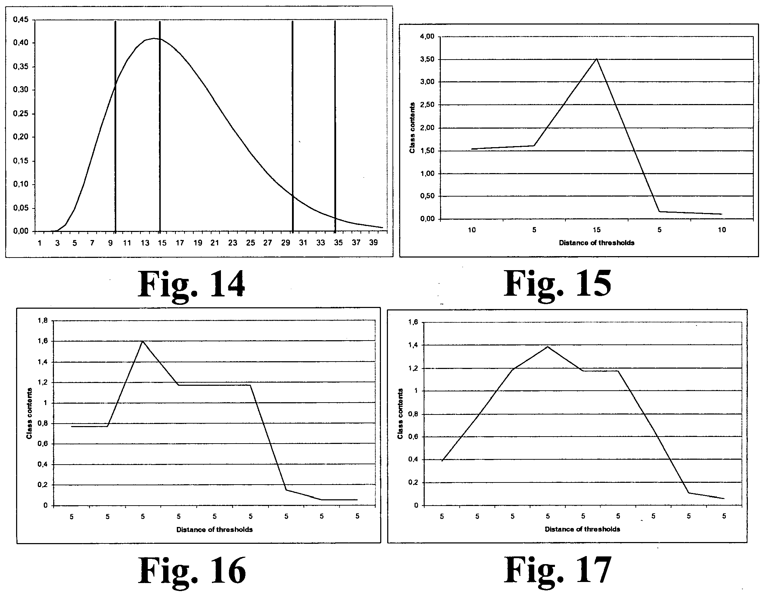

Fig. 14 schematically illustrates how a non-equidistant thresholding of 5 classes is parted into 9 new sub-classes. The distribution in Fig. 14 is measured using the non-equidistant classification Fig. 15. The distribution is parted up into 9 new subclasses, see Fig. 16, and hereafter an interpolation is used on the new subclasses Fig. 17. The stepping can now be used as described in the example illustrated in Figs. 11-13.

Further, during a counting process counting may vary during the time of measurement. For instance the counting may decrease or increase slightly as flow through the aperture changes. In such a situation it may be advantageous to use a repeated sweep method. The method may comprise that the step time is reduced to 1/5 or 1/10 of the total counting time. After the last step of a sweep is complete the whole procedure is started over in a new sweep until the full counting time is reached. Thereby a series of sweeps are performed and the slow change in counting is distributed to all of the counting steps.

In one example the pulse height distribution in an 8-class resolution counting with 5 steps and 10 sweeps could this be noted as C(j:i:k), where j denotes the j'th class, i denotes the I'th step and k denotes the k'th sweep. The 40-class distribution can be found by calculating class content, P(i) as:

$$P\big(i + 5 \cdot (j-1)\big) = \sum_{k=1}^{10} C(j:i:k) \quad \text{, where j = 1 to 8, i = 1 to 5}$$

If the counting is based on flow, the total time used for counting cells in a specific volume may vary slightly. If in the above example a sweep has not come to an end when counting is stopped holes in the data representing the cell size distribution may occur. It is contemplated that this may be corrected or compensated for by not using the last, incomplete sweep, but instead make use of a correction of the contents of the preceding sweeps to match the total counting. If the total counting of all size classes including the last incomplete sweep is denoted Ptot, the correction may be expressed as:

$$P\big(i + 5 \cdot (j-1)\big) = Ptot \cdot \frac{\sum_{k=1}^{last-1} C(j:i:k)}{\sum_{j=1}^{8} \sum_{i=1}^{5} \sum_{k=1}^{last-1} C(j:i:k)}$$

where j = 1 to 8, i = 1 to 5 and *last* is the number of the last sweep encountered when the counting was stopped.

In an advantageous embodiment a series of sweeps may be performed within a first time interval. This may for instance be a period of XX minutes. The flow rate may vary over the first time interval, i.e. the flow rate may change slightly during the measurements. The method may further comprise reducing for each sweep in the series of sweeps the time used for the steps in one sweep. This means that the time spent for one sweep is longer than the time spent on the following sweep and/or sweeps.

Advantageously the time used for one sweep is reduced by a factor in the interval 1/20 to 1/4 for each sweep. The time spent for sweeping may be reduced by a specific factor for each sweep. As an example a first sweep is performed in 10 seconds, and the immediately following sweep is performed in 8 second, thereby reducing the sweep time by 1/5.

In another advantageous embodiment a series of measurements may be performed using a first volume, i.e. the measurement is continued until a specific volume has been investigated. The flow rate may vary over the first time interval, meaning that the total time spent may vary and the number of sweeps may not constitute a complete number of sweeps. The method may further comprise correcting the last sweep using the formula:

$$P(i + \max(i) \cdot (j-1)) = Ptot \cdot \frac{\displaystyle\sum_{k=1}^{last-1} C(j:i:k)}{\displaystyle\sum_{j}\sum_{i}\sum_{k=1}^{last-1} C(j:i:k)}$$

where Ptot is the incomplete sweep, j is the number of classes, i is the step number, max(i) is the number of steps, k is the number of sweeps and last is the number of the last sweep performed.

**Claims**

1. A method of determining the size distribution of cells in a sample by using an apparatus comprising: an analogue to digital pulse height categorisation unit comparing the pulse to analogue threshold voltages and counting each event within each pulse height category using a micro controller, the method comprising the steps of:

   i) selecting a first set of threshold voltages,
   ii) performing a first measurement using the first set of threshold voltages,

   **characterized in that** the method further comprises the steps of:

   iii) selecting a new set of threshold voltages different from the first set of threshold voltages,
   iv) performing a new measurement using the new set of threshold voltages,
   v) determining cell size distribution based on the first measurement and the new measurement.

2. The method according to claim 1, wherein the first set of threshold voltages define a first threshold voltage span and the new threshold voltages define a new threshold voltage span, the first threshold voltage span and the new threshold voltage span overlap or the first threshold voltage span and the new threshold voltage span do not overlap or the first threshold voltage span and the new threshold voltage span have one common point.

3. The method according to claims 1 or 2, wherein the cell size distribution is determined as a reverse calculation performed by means of an adapted algorithm reconstructing the original cell distribution on the basis of the first measurement and the new measurement.

4. The method according to claim 3, wherein the adapted algorithm comprises back-substitution.

5. The method according to any of claims 1-4, wherein the steps iii) and iv) are further performed 1 to 20 times such as 5 to 15 times such as 8 to 12 times such as 2 to 5 times such as 5 to 8 times such as 8 to 10 times such as 10 to 12 times such as 12 to 15 times such as 15 to 18 times such as 18 to 20 times such as 10 times.

6. The method according to claim 5, wherein the new set of threshold voltages in each repetition is different from any previously chosen set of threshold voltages.

7. The method according to any of the claims 1-6, wherein the number of threshold voltages in the set of threshold voltages is 2 to 20, such as 5 to 15, such as 8 to 12, such as 2 to 5, such as 5 to 8, such as 8 to 10, such as 10 to 12, such as 12 to 15, such as 15 to 18, such as 18 to 20, such as 8.

8. The method according to any of the claims 1-7, wherein a new set of threshold voltages is calculated using the equation:

$$T_{i,j+1} = \alpha_{i,j+1} T_{i,j} + \beta_{i,j+1}$$

where:

each set of threshold voltages include N number of threshold voltages,
Ti is the i'th threshold value, i = 0 to N-1
j is the j'th threshold voltage set, j = 1 to the number of repetitions of steps iii) and iv), $\alpha$ may have any positive real value or be zero and $\beta$ may have any real value.

9. The method according to any of the claims 1-8, wherein the first threshold values are equidistantly distributed or the first threshold values are distributed at non-equidistant distances.

10. The method according to any of the claims 1-9, the flow rate varying over a first time interval, the method further comprising:

reducing the influence of the varying flow rate by repeating a series of sweeps,
each lasting a fraction of the total counting time, such that the varying counting is distributed evenly into each step.

11. The method according to claim 10, wherein the time used for one sweep is a factor 1/20 to 1/4 of the total counting time.

12. The method according to any of the claims 10-11, wherein a series of sweeps are to be performed within a first time interval, the method further comprising:

reducing for each sweep in the series of sweeps the time used for the steps in one sweep.

13. The method according to any of the claims 1-12, wherein a series of measurements are to be performed using a first volume, the flow rate varying over the first time interval, the method further comprising:

correcting the last sweep using the formula:

$$P\big(i + \max(i) \cdot (j-1)\big) = Ptot \cdot \frac{\displaystyle\sum_{k=1}^{last-1} C(j:i:k)}{\displaystyle\sum_{j} \sum_{i} \sum_{k=1}^{last-1} C(j:i:k)}$$

where P is the class content, Ptot is the total counting of all size classes including the incomplete sweep, C is the count, j is the number of classes, i is the step number, max(i) is the number of steps, k is the number of sweeps and last is the number of the last sweep performed.

14. An apparatus configured to determine the size distribution of cells in a sample, comprising:

an analogue to digital pulses height categorisation unit comparing the pulse to analogue threshold voltages,
a micro controller configured for counting each event within each pulse height category, the micro controller further configured for:

i) selecting a first set of threshold voltages,
ii) performing a first measurement using the first set of threshold voltages,

**characterized in that** the the micro controller is further configured to:

iii) selecting a new set of threshold voltages different from the first set of threshold voltages,
iv) performing a new measurement using the new set of threshold voltages,
v) determining cell size distribution based on the first measurement and the new measurement.

15. The apparatus according to claim 14, wherein the micro controller comprises a computer software implementation of the method according to any of the claims 1-13.

**Patentansprüche**

1. Verfahren zum Ermitteln der Größenverteilung von Zellen in einer Probe unter Verwendung eines Gerät umfassend eine Analog-Digital-Impulshöhenkategorisierungseinheit, die den Impuls mit analogen Schwellenspannungen vergleicht und unter Verwendung eines Mikrocontrollers jedes Ereignis in jeder Impulshöhenkategorie zählt, wobei das Verfahren die folgenden Schritte umfasst:

   i) Auswählen einer Gruppe von Schwellenspannungen,
   ii) Durchführen einer ersten Messung unter Verwendung der ersten Gruppe von Schwellenspannungen,

   **dadurch gekennzeichnet, dass** das Verfahren weiterhin die folgenden Schritte umfasst:

   iii) Auswählen einer neuen Gruppe von Schwellenspannungen, die sich von der ersten Gruppe von Schwellenspannungen unterscheidet,
   iv) Durchführen einer neuen Messung unter Verwendung der neuen Gruppe von Schwellenspannungen,
   v) Ermitteln der Zellengrößenverteilung basierend auf der ersten Messung und der neuen Messung.

2. Verfahren nach Anspruch 1, wobei die erste Gruppe von Schwellenspannungen einen ersten Schwellenspannungsbereich definiert und die neue Gruppe von Schwellenspannungen einen neuen Schwellenspannungsbereich definiert, wobei sich der erste Schwellenspannungsbereich und der neue Schwellenspannungsbereich überlappen oder sich der erste Schwellenspannungsbereich und der neue Schwellenspannungsbereich nicht überlappen oder der erste Schwellenspannungsbereich und der neue Schwellenspannungsbereich einen gemeinsamen Punkt haben.

3. Verfahren nach Anspruch 1 oder 2, wobei die Zellengrößenverteilung bestimmt wird als eine Umkehrberechnung, die mittels eines angepassten Algorithmus durchgeführt wird, welcher die Originalzellenverteilung basierend auf der ersten Messung und der neuen Messung rekonstruiert.

4. Verfahren nach Anspruch 3, wobei der angepasste Algorithmus eine Rücksubstitution umfasst.

5. Verfahren nach einem der Ansprüche 1 bis 4, wobei die Schritte iii) und iv) weiterhin 1 bis 20 Mal durchgeführt werden, zum Beispiel 5 bis 15 Mal, zum Beispiel 8 bis 12 Mal, zum Beispiel 2 bis 5 Mal, zum Beispiel 5 bis 8 Mal, zum Beispiel 8 bis 10 Mal, zum Beispiel 10 bis 12 Mal, zum Beispiel 12 bis 15 Mal, zum Beispiel 15 bis 18 Mal, zum Beispiel 18 bis 20 Mal, zum Beispiel 10 Mal.

6. Verfahren nach Anspruch 5, wobei sich die neue Gruppe von Schwellenspannungen in jeder Wiederholung von jeder zuvor gewählten Gruppe von Schwellenspannungen unterscheidet.

7. Verfahren nach einem der Ansprüche 1 bis 6, wobei die Anzahl der Schwellenspannung in der Gruppe von Schwellenspannungen 2 bis 20 beträgt, zum Beispiel 5 bis 15, zum Beispiel 8 bis 12, zum Beispiel 2 bis 5, zum Beispiel 5 bis 8, zum Beispiel 8 bis 10, zum Beispiel 10 bis 12, zum Beispiel 12 bis 15, zum Beispiel 15 bis 18, zum Beispiel 18 bis 20, zum Beispiel 8.

8. Verfahren nach einem der Ansprüche 1 bis 7, wobei eine neue Gruppe von Schwellenspannungen unter Verwendung der folgenden Gleichung berechnet wird:

$$T_{i,j+1} = \alpha_{i,j+1} \, T_{i,j} + \beta_{i,j+1}$$

wobei:

   jede Gruppe von Schwellenspannung eine Anzahl N von Schwellenspannungen umfasst,
   Ti der i-te Schwellenwert ist, i = 0 bis N-1 ist,
   j die j-te Schwellenspannungsgruppe ist, j = 1 bis die Anzahl der Wiederholungen der Schritte iii) und iv) ist, $\alpha$ einen positiven reellen Wert haben kann oder null ist und $\beta$ einen reellen Wert haben kann.

9. Verfahren nach einem der Ansprüche 1 bis 8, wobei die ersten Schwellenwerte in gleichmäßigem Abstand verteilt sind oder die ersten Schwellenwerte in ungleichmäßigen Abständen verteilt sind.

**10.** Verfahren nach einem der Ansprüche 1 bis 9, wobei die Flussrate über ein erstes Zeitintervall variiert, wobei das Verfahren weiterhin Folgendes umfasst:

Reduzieren des Einflusses der variierenden Flussrate durch Wiederholen einer Reihe von Abtastungen, die jeweils einen Bruchteil der Gesamtzählzeit dauern, so dass die variierende Zählung gleichmäßig auf jeden Schritt verteilt wird.

**11.** Verfahren nach Anspruch 10, wobei die Zeitdauer für eine Abtastung 1/20-tel bis 1/4-tel der Gesamtzählzeit beträgt.

**12.** Verfahren nach einem der Ansprüche 10 bis 11, wobei eine Reihe von Abtastungen innerhalb eines ersten Zeitintervalls durchzuführen ist, wobei das Verfahren weiterhin Folgendes umfasst:

Reduzieren der für die Schritte in einer Abtastung benötigten Zeit für jede Abtastung in der Reihe von Abtastungen.

**13.** Verfahren nach einem der Ansprüche 1 bis 12, wobei eine Reihe von Messungen unter Verwendung eines ersten Volumens durchzuführen ist, wobei die Flussrate über das erste Zeitintervall variiert, wobei das Verfahren weiterhin Folgendes umfasst:

Korrigieren der letzten Abtastung mithilfe der Formel:

$$P\left(i + \max\left(i\right) \cdot \left(j-1\right)\right) = Ptot \cdot \frac{\sum_{k=1}^{letzte-1} C\left(j:i:k\right)}{\sum_{j}\sum_{i}\sum_{k=1}^{letzte-1} C\left(j:i:k\right)}$$

wobei P der Klasseninhalt ist, Ptot die gesamte Zählung aller Größenklassen einschließlich der unvollständigen Abtastung ist, C der Zählwert ist, j die Anzahl der Klassen ist, i die Schrittnummer ist, max(i) die Anzahl der Schritte ist, k die Anzahl der Abtastungen ist und 'letzte' die Nummer der letzten durchgeführten Abtastung ist.

**14.** Gerät, das dafür konfiguriert ist, die Größenverteilung von Zellen in einer Probe zu ermitteln, umfassend:

eine Analog-Digital-Impulshöhenkategorisierungseinheit, die den Impuls mit analogen Schwellenspannungen vergleicht,
einen Mikrocontroller, der dafür konfiguriert ist, jedes Ereignis in jeder Impulshöhenkategorie zu zählen, wobei der Mikrocontroller weiterhin konfiguriert ist zum:

i) Auswählen einer Gruppe von Schwellenspannungen,
ii) Durchführen einer ersten Messung unter Verwendung der ersten Gruppe von Schwellenspannungen,

**dadurch gekennzeichnet, dass** der Mikrocontroller weiterhin konfiguriert ist zum:

iii) Auswählen einer neuen Gruppe von Schwellenspannungen, die sich von der ersten Gruppe von Schwellenspannungen unterscheidet,
iv) Durchführen einer neuen Messung unter Verwendung der neuen Gruppe von Schwellenspannungen,
v) Ermitteln der Zellengrößenverteilung basierend auf der ersten Messung und der neuen Messung.

**15.** Gerät nach Anspruch 14, wobei der Mikrocontroller eine Computersoftware-Implementierung des Verfahrens nach einem der Ansprüche 1 bis 13 umfasst.

**Revendications**

**1.** Procédé pour déterminer la répartition granulométrique de cellules dans un échantillon en utilisant un appareil comprenant : une unité de catégorisation de hauteur d'impulsion analogique-numérique comparant l'impulsion à des tensions seuil analogiques et comptant chaque événement à l'intérieur de chaque catégorie de hauteur d'impulsion en utilisant un micro dispositif de commande, le procédé comprenant les étapes suivantes :

i) la sélection d'un premier ensemble de tensions seuil,
ii) la réalisation d'une première mesure en utilisant le premier ensemble de tensions seuil,

**caractérisé en ce que** le procédé comprend en outre les étapes suivantes :

iii) la sélection d'un nouvel ensemble de tensions seuil différent du premier ensemble de tensions seuil,
iv) la réalisation d'une nouvelle mesure en utilisant le nouvel ensemble de tensions seuil,
v) la détermination d'une répartition granulométrique de cellules sur la base de la première mesure et de la nouvelle mesure.

2. Procédé selon la revendication 1, dans lequel le premier ensemble de tensions seuil définit un premier écart de tension seuil et les nouvelles tensions seuil définissent un nouvel écart de tension seuil, le premier écart de tension seuil et le nouvel écart de tension seuil se chevauchent ou le premier écart de tension seuil et le nouvel écart de tension seuil ne se chevauchent pas ou le premier écart de tension seuil et le nouvel écart de tension seuil ont un point commun.

3. Procédé selon les revendications 1 ou 2, dans lequel la répartition granulométrique de cellules est déterminée sous forme d'un calcul inverse réalisé au moyen d'un algorithme adapté reconstruisant la répartition cellulaire d'origine sur la base de la première mesure et de la nouvelle mesure.

4. Procédé selon la revendication 3, dans lequel l'algorithme adapté comprend une substitution arrière.

5. Procédé selon l'une quelconque des revendications 1 à 4, dans lequel les étapes iii) et iv) sont en outre réalisées de 1 à 20 fois, par exemple de 5 à 15 fois, par exemple de 8 à 12 fois, par exemple de 2 à 5 fois, par exemple de 5 à 8 fois, par exemple de 8 à 10 fois, par exemple de 10 à 12 fois, par exemple de 12 à 15 fois, par exemple de 15 à 18 fois, par exemple de 18 à 20 fois, par exemple 10 fois.

6. Procédé selon la revendication 5, dans lequel le nouvel ensemble de tensions seuil dans chaque répétition est différent d'un quelconque ensemble précédemment choisi de tensions seuil.

7. Procédé selon l'une quelconque des revendications 1 à 6, dans lequel le nombre de tensions seuil dans l'ensemble de tensions seuil est de 2 à 20, par exemple de 5 à 15, par exemple de 8 à 12, par exemple de 2 à 5, par exemple de 5 à 8, par exemple de 8 à 10, par exemple de 10 à 12, par exemple de 12 à 15, par exemple de 15 à 18, par exemple de 18 à 20, par exemple 8.

8. Procédé selon l'une quelconque des revendications 1 à 7, dans lequel un nouvel ensemble de tensions seuil est calculé en utilisant l'équation :

$$T_{i,j+1} = \alpha_{i,j+1}\ T_{i,j} + \beta_{i,j+1}$$

où :

chaque ensemble de tensions seuil comprend un nombre N de tensions seuil,
Ti est la i$^{ème}$ valeur seuil, i = 0 à N-1
j est le j$^{ème}$ ensemble de tensions seuil, j = 1 et le nombre de répétitions des étapes iii) et iv), $\alpha$ peut présenter une quelconque valeur réelle positive ou être égal à 0 et $\beta$ peut présenter une quelconque valeur réelle.

9. Procédé selon l'une quelconque des revendications 1 à 8, dans lequel les premières valeurs seuil sont réparties de manière équidistante ou les premières valeurs seuil sont réparties à des distances non équidistantes.

10. Procédé selon l'une quelconque des revendications 1 à 9, le débit variant sur un premier intervalle de temps, le procédé comprenant en outre :

la réduction de l'influence du débit variable par la répétition d'une série de balayages,

chacune durant une fraction du temps de comptage total, de sorte que le comptage variable soit réparti uniformément dans chaque étape.

**11.** Procédé selon la revendication 10, dans lequel le temps utilisé pour un balayage est un facteur de 1/20 à 1/4 du temps de comptage total.

**12.** Procédé selon l'une quelconque des revendications 10 et 11, dans lequel une série de balayages est à réaliser dans un premier intervalle de temps, le procédé comprenant en outre :

la réduction de chaque balayage dans la série de balayages du temps utilisé pour les étapes en un balayage.

**13.** Procédé selon l'une quelconque des revendications 1 à 12, dans lequel une série de mesures est à réaliser en utilisant un premier volume, le débit variant sur le premier intervalle de temps, le procédé comprenant en outre :

la correction du dernier balayage en utilisant la formule :

$$P\big(i + \max(i)\cdot(j-1)\big) = Ptot \cdot \frac{\sum_{k=1}^{dernier-1} C(j:i:k)}{\sum_{j}\sum_{i}\sum_{k=1}^{dernier-1} C(j:i:k)}$$

où P est le contenu de classe, Ptot est le comptage total de toutes les classes de taille comprenant le balayage incomplet, C est le compte, j est le nombre de classes, i est le numéro d'étape, max(i) est le nombre d'étapes, k est le nombre de balayages et dernier est le numéro du dernier balayage réalisé.

**14.** Appareil configuré pour déterminer la répartition granulométrique de cellules dans un échantillon, comprenant :

une unité de catégorisation de hauteur d'impulsion analogique-numérique comparant l'impulsion à des tensions seuil analogiques,
un micro dispositif de commande configuré pour compter chaque événement à l'intérieur de chaque catégorie de hauteur d'impulsion, le micro dispositif de commande étant en outre configuré pour :

i) sélectionner un premier ensemble de tensions seuil,
ii) réaliser une première mesure en utilisant le premier ensemble de tensions seuil,

**caractérisé en ce que** le micro dispositif de commande est en outre configuré pour :

iii) sélectionner un nouvel ensemble de tensions seuil différent du premier ensemble de tensions seuil,
iv) réaliser une nouvelle mesure en utilisant le nouvel ensemble de tensions seuil,
v) déterminer une répartition granulométrique de cellules sur la base de la première mesure et de la nouvelle mesure.

**15.** Appareil selon la revendication 14,
dans lequel le micro dispositif de commande comprend une mise en oeuvre logicielle informatique du procédé selon l'une quelconque des revendications 1 à 13.

**Fig. 1**

**Fig. 2**

**Fig. 3**

EP 2 252 872 B1

Fig. 4

**Fig. 5**

Fig. 6

Fig. 7

Fig. 8

Fig. 9

Fig. 10

Fig. 12

Fig. 11

Fig. 13

Fig. 15

Fig. 17

Fig. 14

Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 1371432 A

**Non-patent literature cited in the description**

• Electrical Resistance Pulse Sizing: Coulter Sizing. **V. KACHEL.** Flow Cytometry and Sorting. Wiley-Liss, 1990, 45-80